# EUROPÄISCHE PATENTANMELDUNG

(11) **EP 4 190 711 A1**
(43) Veröffentlichungstag der Anmeldung: **07.06.2023**
(21) Anmeldenummer: 22192959.9
(22) Anmeldetag: 30.08.2022
(51) Int. Cl.: B65D 19/38, G01S 19/48, G06Q 50/28

(54) **LADUNGSTRÄGER**

(30) Priorität: 03.12.2021 DE 102021131954
(71) Anmelder: IPP GmbH, 58256 Ennepetal (DE)
(72) Erfinder: Schrover, Eric Joseph, 3454 NR De Meern (NL)
(74) Vertreter: Roche, von Westernhagen & Ehresmann

(57) **Zusammenfassung**

Die Erfindung betrifft unter anderem einen Ladungsträger (10), insbesondere für ein Warendisplay (11) in Form einer insbesondere aus Kunststoff bestehenden Palette, insbesondere ausgebildet als Viertelpalette (12), umfassend ein Deck (13) mit einer Auflagefläche (14) für Waren (15), an dessen Unterseite (19) eine Mehrzahl von Füßen (1a, 18b, 18c, 18d) angeordnet ist, wobei der Ladungsträger eine elektronische Einrichtung (50) mit einer autonomen Spannungsversorgung (39) umfasst, wobei der Einrichtung (50) eine Vorrichtung (31,33) zu Erfassung von Umgebungsdaten zugehörig ist, mit der Daten und/oder Messwerte aus der Umgebung des Ladungsträger ermittelbar sind, wobei die Einrichtung (50) einen Transmitter (42) zur insbesondere autarken Datenfernübertragung aufweist, mit dem die erfassten Umgebungsdaten oder davon abgeleitete Informationen sowie insbesondere eine Identitätsinformation über die Identität des Ladungsträgers an einen externen Rechner übermittelbar sind.

## Beschreibung

Die Erfindung bezieht sich zunächst auf einen Ladungsträger für ein Warendisplay.

Derartige Ladungsträger werden von der Anmelderin seit geraumer Zeit entwickelt, gefertigt und eingesetzt. Die Ladungsträger dienen zur Bereitstellung eines Warendisplays und sind insbesondere dazu ausgerichtet, Aktionsware, also z. B. jahreszeitenabhängige Waren, wie Osterhasen aus Schokolade, oder Weihnachtsmänner aus Schokolade, in die Verkaufsstätten, z. B. in Supermärkte, zu transportieren und dort unmittelbar für einen Abverkauf bereitzustellen.

Ein Warendisplay im Sinne der Erfindung umfasst einen Ladungsträger, der mehrfach verwendbar ist und aus Kunststoff besteht. Für den Fall, dass der Ladungsträger die typischen Abmessungen eines Viertels einer Standard-Europalette bezeichnet, bezeichnet man diesen Ladungsträger auch als Viertelpalette. Der bekannte, von der Anmelderin eingesetzte Ladungsträger, umfasst vier Füße, die jeweils zwischen sich einen Eingriffsraum für die Zinken eines Gabelstaplers aufweisen. Die Füße dienen dazu, ein Deck des Ladungsträgers in einer Bodenabstandsstellung zu halten. Die Oberseite des Decks ist in der Regel - ebenfalls bis auf Versteifungsstrukturen - glatt gehalten und entlang einer Ebene oder im Wesentlichen entlang einer Ebene ausgerichtet und dient als Auflagefläche für die Waren.

Auf das Warendisplay werden z. B. in Kartonagen verpackte Waren, beispielsweise die zuvor erwähnten Osterhasen aus Schokolade, aufgesetzt. Die Kartonagen sind z. B. aufeinander stapelbar ausgebildet.

In der Regel werden die Warendisplays im Werk des Warenherstellers, also z. B. bei dem Hersteller der Schokoladen-Oberhasen, konfektioniert und sodann zu der Verkaufsstätte, z. B. zum Supermarkt, verbracht. Dort werden die Displays nach Absprache, oder zu vorgegebenen Zeitpunkten, oder nach Bedarf, in den Verkaufsraum gestellt.

Die Waren werden sodann sukzessiv abverkauft, die Kartonagen werden entsorgt und der Ladungsträger kann zurückgeführt und wieder verwendet werden.

Der Ladungsträger dient also dem Transport, aber auch der Aufbewahrung der darauf angeordneten Waren, und stellt unmittelbar eine in einem Verkaufsraum, z. B. in einem Supermarkt, aufstellbare Einheit eines Warendisplays bereit, von denen die Waren abverkauft werden können. Darüber hinaus bietet ein solches Warendisplay die Möglichkeit einer variablen, bedarfsweise änderbaren Positionierung in einem Verkaufsraum.

Ausgehend von dem eingangs beschriebenen Ladungsträger für ein Warendisplay, wie er beispielsweise in der auf die Anmelderin zurückgehenden EP 2 487 11 A1 bekannt geworden ist, besteht die Aufgabe der Erfindung darin, den bekannten Ladungsträger derartig weiterzuentwickeln, dass der Ladungsträger vielseitig einsetzbar ist.

Die Erfindung löst diese Aufgabe mit den Merkmalen des Anspruches 1.

Das Prinzip der Erfindung besteht darin, dass an dem Ladungsträger eine elektronische Einrichtung angeordnet ist. Diese ist insbesondere in dem Deck oder an dem Deck des Ladungsträgers angeordnet. Sie ragt insbesondere nicht in die Auflagefläche hinein.

Die elektronische Einrichtung weist eine autonome, d. h. eigene, Spannungsversorgung auf. Insbesondere kann die Spannungsversorgung von einem Akku oder einer Batterie bereitgestellt sein.

Das Prinzip der Erfindung besteht weiter darin, dass an dem Ladungsträger eine elektronische Einrichtung angeordnet ist, der eine Vorrichtung zur Erfassung von Umgebungsdaten zugehörig ist. Die Vorrichtung zur Erfassung von Umgebungsdaten kann Bestandteil der Einrichtung sein, oder gesondert zu dieser angeordnet, aber mit dieser verbunden sein. Die Einrichtung und die Vorrichtung zur Erfassung von Umgebungsdaten sind unmittelbar an dem Ladungsträger angeordnet, vorteilhafterweise an das Deck angeschlossen oder in das Deck integriert. Insbesondere ragt die Einrichtung und auch die Vorrichtung zur Erfassung von Umgebungsdaten nicht über eine Hüllkontur des Ladungsträgers hinaus.

Die Vorrichtung zur Erfassung von Umgebungsdaten kann je nach Art und Zweck unterschiedlich ausgebildet sein: Als Umgebungsdaten können beispielsweise Temperaturwerte in der Umgebung des Ladungsträgers erfasst werden. In diesem Falle kann die Vorrichtung einen Temperatursensor oder einen Temperaturdetektor oder Infrarotdetektor umfassen.

Die Umgebungsdaten können in der Einrichtung insbesondere auch gespeichert werden, zumindest kurzzeitig gespeichert werden.

Auch zeitliche Verläufe von erfassten Umgebungsdaten, wie z. B. Temperaturverläufe, können gespeichert oder übermittelt werden.

Von Interesse ist beispielsweise festzustellen, ob der Ladungsträger mit darauf befindlichen Waren zu einem bestimmten Zeitpunkt einmal einer besonders hohen Temperatur ausgesetzt worden ist. Im Falle von temperaturempfindlichen Waren, wie z. B. Osterhasen aus Schokolade, kann eine solche Temperaturinformation wichtig sein, da sie ein Indiz dafür sein kann, dass die Temperatur so hoch war, dass die Schokolade schmelzen könnte.

Die Vorrichtung zur Erfassung von Umgebungsdaten kann alternativ oder zusätzlich auch einen Beschleunigungssensor umfassen. Hier können Beschleunigungsdaten erfasst werden. Dies ist beispielsweise von Interesse, um festzustellen, ob der Ladungsträger mit darauf befindlichen Waren während des Transport vom Werk des Waren-Herstellers, in dem das Warendisplay konfektioniert wurde, bis zum Verkaufsort, gegebenenfalls einmal eine sehr starke Beschleunigung erfahren, beispielsweise einen Sturz aus einer großen Höhe zu verzeichnen hatte. Dies könnte ein Indiz dafür sein, dass die Aktionswaren eine Beschädigung oder Beeinträchtigung erlitten haben.

Die Vorrichtung zur Erfassung von Umgebungsdaten kann alternativ oder zusätzlich auch dazu ausgebildet sein, eine Präsenz von Personen oder von Fahrzeugen oder von elektronischen Geräten in der Umgebung oder in der Nähe des Ladungsträgers zu erfassen.

Die Vorrichtung zur Erfassung von Umgebungsdaten alternativ oder zusätzlich kann als optischer Sender, als Vibrationssensor, als akustischer Sensor, Infrarotsensor oder als Sensor für den Empfang von Funksignalen als Receiver oder als Lagesensor ausgebildet sein.

Die Vorrichtung zur Erfassung von Umgebungsdaten kann beispielsweise versuchen, festzustellen, welche mobilen Endgeräte, wie z. B. Smartphones, elektronische Armbanduhren, PDAs, Laptops oder andere, kommunikationsfähige Geräte, z. B. Bluetooth-fähige Geräte oder WLAN-fähige Geräte, sich in einem Umgebungsbereich des Ladungsträgers befinden.

Eine Erfassung dieser Umgebungsdaten kann z. B. unter Zuhilfenahme eines Receivers erfolgen. Dabei kann auch vorgesehen sein, dass der Receiver zunächst Anfragesignale oder Anregungssignale emittiert, die dann von elektronischen Geräten in der Umgebung des Ladungsträgers aufgenommen werden, und zu einer Reaktion oder zu einer Response führen.

Beispielsweise können Schwingkreise angeregt werden. Die von den angeregten Schwingkreisen emittierten Signale können von dem Receiver empfangen werden.

Die erfassten Umgebungsdaten können Informationen über die elektrischen oder elektronischen Geräte umfassen.

Zu den erfassten Umgebungsdaten können eine Vielzahl von Informationen über die elektronischen Geräte gehören, z. B. deren Identität, deren Kennung, deren Name, deren Distanz, deren Geschwindigkeit, deren Verweildauer in der Nähe des Ladungsträgers, z. B. unter Berücksichtigung von Distanzen des elektronischen Gerätes zum Ladungsträger etc.

Aus der Zahl, der Häufigkeit, der Identitäten, der Namen, der Verweildauern oder der Distanz sowie der Bewegungsgeschwindigkeiten der elektronischen Geräte relativ zu dem Ladungsträger, können dann unterschiedliche Schlüsse gezogen werden. Beispielsweise können diese Informationen dazu verwendet werden, festzustellen, ob der Ladungsträger an einer prominenten Position in einem Verkaufsraum platziert worden ist, also z. B. optimal in Bezug zu Personenströmen einkaufender Personen platziert wurde.

Anhand des Temperatursensors kann beispielsweise überprüft werden, ob der Ladungsträger, insbesondere die auf ihm angeordneten Waren, z. B. Waren aus Schokolade, wie Osterhasen oder Weihnachtsmänner aus Schokolade, vielleicht - auch nur kurzzeitig - einer zu hohen Temperatur ausgesetzt worden sind; dies kann dann beispielsweise zu einer Beeinträchtigung der Waren führen und für eine Bearbeitung von Reklamationen oder Schadensersatzansprüchen von Relevanz sein.

Als Messwerte aus der Umgebung des Ladungsträgers oder als Umgebungsdaten im Sinne der Erfindung werden Größen verstanden, die in einem unmittelbaren, festlegbaren Bereich um den Ladungsträger herum generiert werden.

Der Erfassungsbereich kann beispielsweise wenige Zentimeter bis mehrere Meter betragen.

Vorzugsweise ist der Erfassungsbereich oder die Weite des Erfassungsbereiches oder ein Erfassungswinkelbereich der Vorrichtung zur Erfassung von Umgebungsdaten einstellbar.

Beispielsweise kann die Empfindlichkeit der Vorrichtung zur Erfassung von Umgebungsdaten eingestellt werden. So können beispielsweise von dem Receiver, je nach Anforderung, unterschiedliche Verstärkungen von empfangenden Signalen vorgesehen sein, und auf diese Weise die Sensitivität des Receivers, oder der Empfangsbereich des Receivers, eingestellt werden.

Die Einrichtung umfasst darüber hinaus einen Transmitter, mit dem die erfassten Umgebungsdaten an einen externen Rechner übermittelbar sind. Erfindungsgemäß kann die Einrichtung auch für eine Verarbeitung der erfassten Umgebungsdaten sorgen und verarbeitete oder vorverarbeitete Daten, also von den erfassten Umgebungsdaten abgeleitete Informationen, übermitteln.

Mit der Übermittlung der Daten können auch Identitätsinformationen über die Identität des Ladungsträgers übermittelt werden.

Gemäß einer vorteilhaften Ausgestaltung der Erfindung umfasst die Vorrichtung zur Erfassung von Umgebungsdaten einen Receiver. Dieser ist weiter vorteilhaft für einen Empfang von Daten, insbesondere für einen Empfang von Funksignalen, ausgebildet. Der Receiver kann insbesondere einen Sniffer umfassen, weiter insbesondere einen Bluetooth-Sniffer.

Der Receiver kann z. B. Funksignale aus der Umgebung aufnehmen. Er kann darüber hinaus auch in der Lage sein, eine Emission von Signalen durch die elektronischen Geräte zu provozieren, und deren Generierung auszulösen.

Der Receiver kann z. B. in den Umgebungsbereich des Ladungsträgers hineinhorchen und z. B. feststellen, ob bestimmte, zur Kommunikation über einen bestimmten Funkstandard, z. B. bluetoothfähige, mobile elektronische Geräte präsent sind.

Die erfassten Umgebungsdaten können von der Einrichtung bearbeitet werden und/oder können von einem externen Rechner verarbeitet werden.

Gemäß einer vorteilhaften Ausführungsform der Erfindung ist der Einrichtung eine Ortungsvorrichtung zugehörig. Die Ortungsvorrichtung kann insbesondere Bestandteil der Einrichtung sein oder dieser Einrichtung zugeordnet sein. Die Ortungsvorrichtung ist insbesondere an dem Ladungsträger angeordnet.

Die Ortungsvorrichtung kann von einer Steuerung der elektronischen Einrichtung gesondert ausgebildet sein. Die Ortungsvorrichtung kann aber auch integraler Bestandteil einer Steuerung der elektronischen Einrichtung sein.

Die Ortungsvorrichtung ermöglicht eine Ortung des Ladungsträgers.

Dabei kann vorgesehen sein, dass die Ortungsvorrichtung dazu ausgebildet ist, dass mit ihr Positionsdaten erfassbar, ermittelbar oder übermittelbar sind. Die Positionsdaten umfassen eine Information über eine exakte Position des Ladungsträgers. Diese Information kann mittelbar oder unmittelbar vorliegen oder erfasst werden.

Als unmittelbare Information wird beispielsweise eine unmittelbare. Absolute z. B Positionsangabe, z. B. unter Verwendung einer Breitenangabe und einer Längenangabe verstanden, oder eine vergleichbare Angabe.

Als mittelbare Information über eine exakte Position des Ladungsträgers wird z. B. eine Relativposition des Ladungsträgers in Bezug zu einem Sendemast oder in Bezug mehreren Sendemasten oder in Bezug zu einer Position eines Satelliten oder in Bezug zu anderen Positionsdaten verstanden. Mittelbare Informationsangaben über eine exakte Position können aber beispielsweise auch Signallaufzeiten oder Laufzeitunterschiede oder relative Distanzen zu anderen Körpern, Einrichtungen, Gegenständen, Kommunikationseinrichtungen oder dergleichen umfassen, aus denen unmittelbare Informationen herleitbar oder errechenbar sind.

Eine exakte Position eines Ladungsträgers im Sinne der Erfindung umfasst eine sehr genaue oder detaillierte Ortsangabe des Ladungsträgers. Die Ortsangabe umfasst insbesondere die Information, oder lässt insbesondere eine Schlussfolgerung zu, ob sich der Ladungsträger in einem Verkaufsraum eines Geschäftes, also an dem vorgesehenen, endgültigen Aufstellort befindet, oder ob er diese Position noch nicht erreicht hat, und sich beispielsweise noch in einem Lagerraum in der Nähe des Verkaufsraumes befindet.

Bei einer weiteren Ausführungsform der Erfindung kann eine exakte Position des Ladungsträgers auch die Information umfassen, an welcher Stelle oder in welchem Bereich innerhalb eines Verkaufsraumes sich der Ladungsträger befindet, also z. B. ob der Ladungsträger mit dem Warendisplay nahe an einem Kassenbereich eines Supermarktes, oder nahe an einem Eingangsbereich oder nahe einem Eckbereich des Supermarktes angeordnet ist.

Als mittelbare Informationen über die exakte Position des Ladungsträgers werden beispielsweise auch Rohdaten und Rohinformationen angesehen, aus denen eine Information über eine exakte Position des Ladungsträgers herleitbar ist, z. B. durch Berechnung oder durch Anwendung eines Algorithmus, herleitbar ist.

Gemäß der Erfindung weist die Einrichtung darüber hinaus einen Transmitter auf. Der Transmitter ist insbesondere zur autarken Datenfernübertragung vorgesehen. Als autarke Datenfernübertragung wird eine Übermittlung von Informationen von dem Transmitter an einen extern angeordneten Rechner verstanden, wobei diese Übertragung völlig unabhängig von der in der Verkaufsstätte vorhandenen KommunikationsInfrastruktur durchgeführt werden kann. Beispielsweise kann eine solche Informationsübermittlung über GSM-Netze, Telefonnetze oder andere Einrichtungen, insbesondere drahtlose Kommunikationsnetze, erfolgen. Damit ist der Ladungsträger, was die Informationsübermittlung der Positionsdaten angeht, auf die Verkaufsstätte und auf deren Kommunikationsinfrastruktur nicht angewiesen.

Als Datenfernübertragung wird eine Übertragung entlang einer Distanz verstanden, die jedenfalls mehrere 10 Meter, insbesondere auf viele Kilometer, überschreitet, und die über in der Regel vorhandene Installationen, wie z. B. Telefon-, Richtfunk- oder Funksendemasten oder über Satelliten, erfolgt.

Mit dem Transmitter können erfindungsgemäß erfasste Umgebungsdaten oder daraus abgeleitete Informationen sowie gegebenenfalls Positionsdaten oder unmittelbare oder mittelbare Informationen über eine exakte Position des Ladungsträgers an einen externen Rechner übermittelt werden. Eine Verarbeitung dieser Informationen kann durch den externen Rechner oderbeispielsweise auch teilweise oder vollständig bereits in der Einrichtung erfolgen, z. B. durch eine dort vorhandene Steuereinheit oder einen Rechner, oder aber ausschließlich oder überwiegend an dem externen Rechner erfolgen. Eine Verarbeitung der Informationen und/oder die damit zusammenhängenden Rechenarbeiten kann von der Einrichtung und von dem Rechner zu gleichen oder unterschiedlichen Teilen geleistet werden.

Aus den erfassten Umgebungsdaten können, je nachdem um welche Art von erfassten Umgebungsdaten es sich handelt, gänzlich unterschiedliche Schlüsse gezogen werden.

Falls die erfassten Umgebungsdaten Temperaturinformationen enthalten, kann geprüft werden, ob der Ladungsträger während des Transports von dem Ort der Konfektion zu einem Warendisplay bis zum Abverkauf der Waren im Verkaufsraum möglicherweise einer überhöhten Temperatur ausgesetzt war.

Für den Fall, dass die umfassten Umgebungsdaten Beschleunigungsdaten umfassen, kann überprüft oder berücksichtigt werden, dass das Warendisplay mit darauf angeordneten Waren gegebenenfalls einen Stoß, einem Unfall oder einem Sturz unterlag.

Für den Fall, dass die erfassten Umgebungsdaten über elektronische Geräte aus der Umgebung des Ladungsträgers umfassen, kann gegebenenfalls eine Unterscheidung getroffen werden, ob sich der Ladungsträger noch in einem Lagerraum nahe einer Verkaufsstätte befindet, oder bereits in einer Verkaufsstätte. Gegebenenfalls kann auch die Information erhalten werden, wo in einem Verkaufsraum sich der Ladungsträger befand, z. B. nahe einer Kasse oder nahe in einer ruhigen, toten Ecke des Verkaufsraums, die von nicht so vielen einkaufenden Kunden frequentiert wird.

Auch kann durch Erfassung von Verweildauern von elektronischen Geräten in unmittelbarer Nähe des Ladungsträgers eine Information darüber erhalten werden, ob sich einkaufende Kunden mit den Aktionswaren befassen, z. B. dort befindliche Informationen lesen.

Weiter kann, für den Fall, dass zeitgleich zu dem Verbringen der Aktionswaren in einem Supermarkt Werbeschaltung, z. B. im Rundfunk oder Fernsehen laufen, versucht werden, abzuschätzen, ob hierdurch Kundenfrequenzen erhöht oder reduziert werden, oder unbeeinflusst bleiben.

Aus den Positionsdaten und/oder aus den erfassten Umgebungsdaten kann z. B. die exakte Position des Ladungsträgers ermittelt werden, und damit auch, ob der Ladungsträger einen Verkaufsraum erreicht hat. Dies kann unter Verwendung von Algorithmen oder unter Berücksichtigung bestimmter Kriterien festgestellt werden. Die Feststellung kann von der Einrichtung getroffen werden, oder von einem externen Rechner. Dies hängt davon ab, wie die Rechenkapazitäten verteilt werden.

Von der Einrichtung kann ein Signal an den externen Rechner übermittelt werden, dass festgestellt wurde, dass der Ladungsträger einen Verkaufsraum erreicht hat. Alternativ können von der Einrichtung Daten übermittelt werden, die eine Feststellung zulassen, dass der Ladungsträger einen Verkaufsraum erreicht hat.

Informationen, auf deren Basis eine Feststellung von einem externen Rechner getroffen werden kann, dass der Ladungsträger einen Verkaufsraum erreicht hat, werden ebenfalls als Information über eine solche Feststellung im Sinne der vorliegenden Patentanmeldung angesehen.

Von der Einrichtung kann auch ein Signal an den externen Rechner übermittelt werden, ob Umgebungsdaten erfasst wurden.

Erfasste Umgebungsdaten können jeweils unverzüglich, oder regelmäßig, z. B. täglich oder mehrmals täglich, oder nur durch Abfrage durch einen externen Rechner an den externen Rechner übermittelt werden.

Von dem Transmitter kann auch eine Information über die Identität des Ladungsträgers an den externen Rechner übermittelt werden. Die Identität des Ladungsträgers ist beispielsweise eine eindeutige Kennung z. B. in Form einer Seriennummer oder einer ID.

Der Ladungsträger umfasst eine Mehrzahl von Füßen. Es kann sich dabei um beispielsweise drei oder vier Füße handeln, die vorzugsweise entlang der Eckbereiche des Ladungsträgers angeordnet sind. Als Begriff Fuß im Sinne der Erfindung wird auch eine Rolle verstanden, wenn der Ladungsträger z. B. als Dolly ausgebildet ist. Auch werden unter Fuß auch Kufen oder andere Standvorrichtungen verstanden.

Der Ladungsträger ist vorzugsweise einstückig und einteilig ausgebildet. Von der Erfindung ist auch umfasst, wenn der Ladungsträger mehrteilig ausgebildet ist.

Der Ladungsträger im Sinne der Erfindung ist eine Einrichtung, auf die Waren, insbesondere verpackt in Kartonage-Displayverpackungen aufgesetzt werden können.

Gemäß einer vorteilhaften Ausgestaltung ist der Receiver dazu ausgebildet ist, Daten von mobilen elektrischen Geräten, insbesondere von tragbaren kommunikationsfähigen Geräten, wie Smartphone, Watch, Datenbrille, PDA, Laptop, Tablet, Earpods, oder dergleichen., zu empfangen, insbesondere abzufragen.

Bei dieser vorteilhaften Ausführungsform der Erfindung bemerken die Personen, die z. B. in einem Supermarkt einkaufen, im Zweifel gar nicht, dass die elektronischen Geräte abgefragt werden. Im übrigen erscheint eine solche Abfrage auch unter datenschutzrechtlichen Gesichtspunkten unproblematisch.

Gemäß einer vorteilhaften Ausgestaltung der Erfindung umfasst der Receiver einen Bluetooth-Sniffer oder einen anderen Sensor zur Abfrage von Daten mobiler Endgeräte in der Umgebung des Ladungsträgers.

Diese Ausgestaltung der Erfindung ermöglicht einen Rückgriff auf kommerziell erhältliche Bauelemente und ermöglicht damit eine einfache Konstruktion einer erfindungsgemäßen Vorrichtung.

Gemäß einer vorteilhaften Ausgestaltung ist der Receiver zum Datenempfang per Datennahübertragung, z.B. per Bluetooth, WLAN oder NFC, ausgebildet.

Diese Ausgestaltung erlaubt einen Rückgriff auf kommerziell erhältliche und standardisierte elektronische Bauelemente.

Gemäß einer vorteilhaften Ausgestaltung umfasst die Vorrichtung zur Erfassung von Umgebungsdaten einen Umgebungssensor.

Diese vorteilhafte Ausgestaltung der Erfindung ermöglicht eine Detektion von Umgebungsdaten jeglicher physikalischer Art. Dabei können an sich bekannte Sensoren oder Detektoren eingesetzt werden.

Gemäß einer vorteilhaften Ausgestaltung der Erfindung nimmt der Umgebungssensor physikalische Messwerte auf, insbesondere Messwerte akustischer Art, optischer Art, induktiver Art, kapazitiver Art, thermischer Art oder Vibrationen.

Diese vorteilhafte Ausgestaltung der Erfindung ermöglicht eine Feststellung einer Vielzahl von physikalischen Informationen über die Umgebung des Ladungsträgers.

Gemäß einer vorteilhaften Ausgestaltung ist der Einrichtung eine Ortungsvorrichtung zugehörig, mit der Positionsdaten erfassbar, ermittelbar oder herleitbar sind, die eine unmittelbare oder mittelbare Information über eine exakte Position des Ladungsträgers umfassen.

Gemäß einer vorteilhaften Ausgestaltung der Erfindung kooperiert der Ladungsträger mit einem Rechner, mit dem aus den Umgebungsdaten eine unmittelbare oder mittelbare Information über eine exakte Position des Ladungsträgers herleitbar ist.

Diese vorteilhafte Ausgestaltung der Erfindung ermöglicht eine exakte Positionsbestimmung des Ladungsträgers.

Gemäß einer weiteren vorteilhaften Ausgestaltung der Erfindung kooperiert der Ladungsträger mit einem Rechner, mit dem die Positionsdaten mit den Umgebungsdaten kombinierbar sind.

Gemäß dieser vorteilhaften Ausgestaltung der Erfindung kann eine sehr exakte Bestimmung der Position des Ladungsträgers erreicht werden.

Gemäß einer vorteilhaften Ausgestaltung der Erfindung ist der Ortungsvorrichtung eine Differenzierungsvorrichtung zugeordnet. Diese dient zur Ermittlung der exakten Position des Ladungsträgers.

Mit der Differenzierungsvorrichtung ist eine Position des Ladungsträgers in einem Lagerort eines Geschäftes von einer Position des Ladungsträgers in einem Verkaufsraum des Geschäftes unterscheidbar.

Die Differenzierungsvorrichtung ist also in der Lage, unterschiedliche, nahe beieinander befindliche Positionen des Ladungsträgers in der Nähe des Verkaufsraums voneinander zu unterscheiden.

Die Differenzierungsvorrichtung kann von der Steuerung der elektronischen Einrichtung und/oder von der Ortungsvorrichtung separat ausgebildet sein, beispielsweise von einem sogenannten elektronischen Bauelement bereitgestellt sein. Die Differenzierungsvorrichtung kann aber auch Bestandteil der Ortungsvorrichtung sein; sie kann alternativ auch Bestandteil einer Steuereinheit der Einrichtung sein.

Eine Erfassung der Positionsdaten erfolgt gemäß einer vorteilhaften Ausgestaltung der Erfindung unter der Maßgabe, dass eine Ortauflösung oder eine Ortserkennung derartig konzipiert ist, dass die Ortungsvorrichtung in der Lage ist, festzustellen oder zu erkennen, dass der Ladungsträger einen Verkaufsraum erreicht hat.

Eine gegebenenfalls auch in Kooperation mit der Differenzierungsvorrichtung, zu treffende Feststellung, dass der Ladungsträger einen Verkaufsraum erreicht hat, umfasst gemäß der Erfindung auch die Variante, dass die Ortungsvorrichtung lediglich Basis-Informationen bereitstellt, mit denen eine nachgeschaltete Rechnereinheit, z. B. eine Rechnereinheit der Steuerung der Einrichtung, oder alternativ eine Rechnereinheit eines externen Rechners, in die Lage versetzt wird, festzustellen, dass der Ladungsträger einen Verkaufsraum erreicht hat.

Die Informationsverarbeitung kann also entweder in der Einrichtung oder von einem nachgeschalteten, gegebenenfalls auch externen Rechner vorgenommen werden.

Diese Feststellung kann beispielsweise durch eine besonders hoch ortsaufgelöste Bestimmung der Position erfolgen.

Es können zur Feststellung aber auch andere Informationen oder zusätzlich andere Informationen verwendet werden.

Gemäß der Erfindung weist die Einrichtung einen Umgebungssensor auf, der Daten aus der Umgebung des Ladungsträgers aufnimmt. Diese Daten können Informationen über Positionen umfassen. Die Daten können bei der Bestimmung der exakten Position des Ladungsträgers herangezogen werden, sei es alleinig, oder sei es zusätzlich zu anderen Positionsdaten.

Der Umgebungssensor kann gemäß der Erfindung z. B. optisch, akustisch oder durch Vibrationsdetektion, Messwerte aufnehmen.

Beispielsweise kann über physikalische Parameter eine Information über die Umgebung des Ladungsträgers erfasst werden.

Optisch können z. B. Daten aufgenommen werden, die Auskunft darüber geben, ob sich regelmäßig Personen oder Geräte an dem Ladungsträger vorbeibewegen. Bewegen sich überwiegend Personen, z. B. auch zu bestimmten Tageszeiten oder in einer bestimmten Häufigkeit an dem Ladungsträger vorbei, und wird dies z. B. durch einen optischen Sensor erkannt, lässt sich daraus schließen, dass sich der Ladungsträger in einem Verkaufsraum befindet.

Stellt der optische Sensor hingegen fest, dass überwiegend Gabelstapler oder anderen Beförderungsfahrzeuge in der unmittelbaren Umgebung des Ladungsträgers häufig bewegt werden, kann dies ein Kriterium darstellen, dass sich der Ladungsträger noch in einem Lagerraum befindet.

Der Umgebungssensor kann alternativ auch mit Näherungssensoren oder dergleichen ausgestattet sein.

Gemäß einer Ausführungsform der Erfindung kann der erfindungsgemäße Ladungsträger Positionsinformationen, die er über eine Ortungseinrichtung zu einem Standort-Bestimmungssystem, wie GPS, empfängt, mit den erfassten Umgebungsdaten kombinieren, die dann in Kombination eine Aussage über die exakte Position des Ladungsträgers zulassen. Dabei kann beispielsweise ein nur grobe oder ungefähre Standortangaben bereitstellendes Positionsbestimmungssystem in Kombination mit dem Umgebungssensor auf erfindungsgemäße Weise eine exakte Positionsbestimmung zulassen.

Gemäß einer besonderen Ausgestaltung der Erfindung ist an der Einrichtung ein Umgebungssensor in Form eines Receivers angeordnet, der in der Lage ist, Daten von mobilen Endgeräten zu erkennen. Aus diesen Daten kann z. B. auf die tatsächliche, eigene Position des Ladungsträgers geschlossen werden.

Gemäß einer weiteren vorteilhaften Ausgestaltung der Erfindung ist mit einer Ortungsvorrichtung das Erreichen des Verkaufsraumes durch den Ladungsträger feststellbar. Diese Feststellung kann z. B. von der Ortungsvorrichtung getroffen werden. Von der Erfindung ist weiter umfasst, dass die Feststellung von einer mit der Ortungsvorrichtung verbundenen Rechnereinheit getroffen wird, wobei diese Rechnereinheit im weitesten Sinne als der Ortungsvorrichtung zugehörig verstanden wird.

Gemäß einer weiteren vorteilhaften Ausgestaltung der Erfindung ist vorgesehen, dass von der Einrichtung eine Information über das Erreichen des Verkaufsraums durch den Ladungsträger weiterleitbar ist. Insbesondere kann diese Position an den externen Rechner weitergeleitet werden.

Vorteilhaft erfolgt eine Übermittlung dieser Information unmittelbar nach deren Feststellung, also beispielsweise ohne zeitliche Verzögerung oder mit nur geringer zeitlicher Verzögerung, z. B. innerhalb einer vorgegebenen Zeitdauer, von z. B. einer Stunde oder einem Tag oder weniger als zwei Tagen oder dergleichen.

Eine Übermittlung dieser Information und/oder eine Übermittlung der oben beschriebenen Positionsdaten oder der weiteren Information oder der Identitätsinformation an den externen Rechner, kann im Rahmen von Produktionsprozessen z. B. wie folgt Berücksichtigung finden: Sobald der externe Rechner erkennt, dass eine bestimmte Anzahl von Warendisplays zu bestimmten Zeitpunkten tatsächlich in den Verkaufsraum gelangt ist, und nicht mehr in den den Verkaufsräumen naheliegenden Lagerräumen darauf warten muss, in den Verkaufsraum verlagert zu werden, können Produktionsprozesse angestoßen werden, so dass z. B. rechtzeitig, ohne Verzögerung, auch unter Berücksichtigung von Lieferketten, bei Bedarf eine Nachproduktion erfolgen kann. Diese Informationen können also zur Produktionssteuerung verwendet werden.

Auch kann beispielsweise für den Fall, dass sukzessive mehrere Warendisplays gleicher oder ähnlicher Art in den Verkaufsraum gelangen, und dies von dem externen Rechner festgestellt wird, aus den erlangten Daten ein Schluss getroffen werden, dass zu einem späteren Zeitpunkt eine bestimmte Nachfrage zu erwarten ist. Selbstverständlich können diese Informationen auch in Bezug zu Wetter- oder Klimainformationen oder dergleichen gesetzt werden.

Aktionswaren, die im Rahmen dieser Warendisplays in die Verkaufsstätten gelangen sollen, umfassen beispielsweise auch jahreszeiten- oder klimaabhängige Waren, wie z. B. Auto-Scheibenwaschflüssigkeit mit Frostschutzmittel, Eiskratzer oder dergleichen.

Wenn diese Waren rechtzeitig zu einer Kaltwetterperiode in den Verkaufsraum gelangen, und der Produzent darüber eine Information erhält, kann er abschätzen, dass diese Waren sich gut verkaufen und somit eine Nachproduktion rechtzeitig genug veranlassen.

Befinden sich allerdings während eines Wintereinbruches die entsprechenden Warendisplays noch nicht in dem Verkaufsraum (sondern nur im benachbarten Lager), z. B. weil der Filialleiter vor Ort noch keinen Platz in dem Verkaufsraum für die Warendisplays gefunden hat, kann dies in Summe der erhaltenen Informationen bei dem Hersteller der Waren als Information verwendet werden, dass sich eine Nachproduktion aufgrund eines nur geringen Bedarfs nicht lohnt, oder weil sich ein diesbezüglicher Bedarf an Nachproduktion noch gar nicht eingestellt hat.

Von besonderem Interesse ist, dass mit der erfindungsgemäßen Ausgestaltung des Ladungsträgers Informationen über die Umgebung des Ladungsträgers, also z. B. die maßgebliche Information, dass ein bestimmter Ladungsträger einen Verkaufsraum erreicht hat, unmittelbar an den Warenhersteller geliefert werden kann, und dies unabhängig von einer technischen Infrastruktur der unterschiedlichen Märkte. Dabei ist zu berücksichtigen, dass beispielsweise die Hersteller von Schokoladen-Osterhasen Supermarktketten mit unterschiedlichen technischen Infrastrukturen und unterschiedlichen technischen Ausrüstungen beliefern, wobei erfindungsgemäß unter Umgehung der technischen Infrastruktur der Supermärkte oder der übrigen Verkaufsstätten, eine entsprechende Informationsgewinnung möglich ist. Hiervon kann der Hersteller der Waren profitieren und frühzeitig Prognosen treffen oder Analysen anstellen.

Von der Erfindung ist auch umfasst, wenn die von dem Ladungsträger übermittelte Information, dass ein bestimmter Ladungsträger einen Verkaufsraum erreicht hat, dazu verwendet wird, zu überprüfen, ob die Warendisplays zu bestimmten Zeiträumen den Verkaufsraum erreicht haben. Beispielsweise werden bestimmte Aktionswaren mit zeitgleich erfolgenden Werbeschaltungen in Rundfunk, Fernsehen, Printmaterial oder Social Media Kanälen verbunden; läuft beispielsweise eine große Werbekampagne im Fernsehen für einen bestimmten Zeitraum, ab einen bestimmten Zeitpunkt, in Bezug zu bestimmten Aktionswaren, ist es für den Hersteller der Waren wünschenswert, dass zu diesem Zeitpunkt die Waren auch tatsächlich in den Verkaufsraum gelangen, um eine entsprechende Wirkung und Verkaufsförderung zu erzielen. Stellt der Hersteller der Waren fest, dass die Warendisplays sich nur im Lager, aber noch nicht im Verkaufsraum befinden, besteht die Möglichkeit, in diesen Prozess einzugreifen und bei Bedarf dazu aufzufordern, die Warendisplays aus dem Lager in der Verkaufsraum zu verbringen. Es besteht also eine Prüf- und Kontrollmöglichkeit, die von dem erfindungsgemäßen Ladungsträger bereitgestellt wird.

Gemäß einer weiteren vorteilhaften Ausgestaltung der Erfindung ist vorgesehen, dass von der Einrichtung die erfassten Umgebungsdaten regelmäßig, oder auf Abfrage, oder unmittelbar nach deren Erfassung, weiterleitbar sind, insbesondere an den externen Rechner, weiterleitbar sind.

Gemäß einer weiteren vorteilhaften Ausgestaltung der Erfindung ist vorgesehen, dass der Ladungsträger eine Ortungsvorrichtung aufweist, die in ein hochauflösendes Standort-Bestimmungssystem, z. B. in ein Satelliten-gestützt arbeitendes Standort-Bestimmungssystem, eingebettet ist.

Gemäß einer weiteren vorteilhaften Ausgestaltung der Erfindung ist vorgesehen, dass die Ortungsvorrichtung in ein hoch auflösendes Standortbestimmungssystem eingebettet ist. Es kann sich dabei beispielweise um ein satelliten-gestützt arbeitendes Standortbestimmungssystem handeln, z. B. eine besondere Form eines GPS-Systems, welches hoch auflösende Ortsinformationen übermittelt.

Zur Erzielung einer solchen Einbettung kommen völlig unterschiedliche technische Aufgaben in Betracht.

Beispielsweise gibt es unterschiedliche Systeme unterschiedlicher Satellitenbetreiber, die entsprechende genaue Standort-Positionsangaben liefern und eine genaue Standortpositions-Bestimmung leisten.

Gemäß einer weiteren vorteilhaften Ausgestaltung der Erfindung ist vorgesehen, dass der Transmitter für einen Betrieb im Ultrabreitband ausgelegt ist. Damit wird eine besonders vorteilhafte Art eines Protokolls einer Datenübertragung vorgeschlagen.

Gemäß einer weiteren vorteilhaften Ausgestaltung der Erfindung weist die Einrichtung einen Receiver auf. Dieser Receiver ist für einen Empfang von Daten mobiler Endgeräte ausgebildet, insbesondere mobiler kommunikationsfähiger Endgeräte.

Dabei handelt es sich beispielsweise um Endgeräte, insbesondere um drahtlose Kommunikation durchführbar Endgeräte, wie Smartphones, Watches, PDA, Laptops, Datenbrillen oder andere Geräte, wie sie von Menschen typischerweise mit sich transportiert werden. Diese Endgeräte können beispielsweise Datenprotokolle, wie WLAN, Bluetooth oder NFC, verstehen und können, sobald sie in einen Empfangsbereich eines Receivers gelangen, von sich aus oder automatisch, insbesondere auf Nachfrage oder angeregt durch den Receiver, Informationen senden.

Jedenfalls ist der Receiver erfindungsgemäß dazu ausgelegt, entsprechende Informationen abzufragen. Beispielsweise kann ein solcher Receiver als Bluetooth-Sniffer ausgebildet sein und prüfen, ob in der näheren Umgebung befindliche Endgeräte vorhanden sind, die gewisse Daten preisgeben, oder die dem Receiver überhaupt ihre Präsenz anzeigen.

Vorteilhafterweise kann der Receiver zum Empfang der Daten per Datennahübertragung ausgebildet sein. Als Datennahübertragung wird beispielsweise eine Datenübertragung per Bluetooth oder NFC-Protokoll oder per WLAN verstanden.

Vorteilhafterweise ist der Receiver mit einem Bluetooth-Sniffer ausgestattet. Der Receiver kann auch andere Sensoren zur Abfrage von Daten mobiler Endgeräte in der Umgebung des Ladungsträgers umfassen.

Die abzufragenden Daten können beispielsweise Informationen über die Namen und/oder Identitäten und/oder Seriennummern von in der Umgebung des Ladungsträgers befindlichen mobilen Geräten z. B. die Bluetooth-Adressen, umfassen.

Der Receiver kann diese Informationen beispielsweise einer Steuerung der Einrichtung oder einer damit verbundenen Recheneinheit zur Verfügung stellen.

Die Einrichtung kann aus den von dem Receiver erhaltenen Daten Informationen herauslesen oder daraus ermitteln: Diese Informationen können z. B. zur Bestimmung der exakten Position des Ladungsträgers verwendet werden. Die Informationen können auch zur Überprüfung der exakten Position des Ladungsträgers verwendet werden. Weiter alternativ können die Informationen bei der Bestimmung der exakten Position des Ladungsträgers berücksichtigt werden.

Die erfassten Umgebungsdaten können aber auch auf andere Weise verwendet werden: So können beispielsweise für den Fall, dass die Vorrichtung zum Erfassen von Umgebungsdaten einen Temperatursensor umfasst, und feststellt, dass ein Temperaturschwellwert überschritten wurde, Warnsignale generieren, und veranlassen, dass die Aktionswaren aus dem Verkehr zogen werden und nicht weiter verkauft werden dürfen.

Selbiges kann veranlasst werden, wenn z. B. ein Beschleunigungssensor feststellt, dass eine übermäßige, z. B. einen Beschleunigungsschwellwert überschreitende Beschleunigung erreicht wurde. Dies könnte darauf hindeuten, dass die Aktionswaren mit dem Warendisplay einen Sturz oder einen Fall unterworfen waren, und daher beschädigt sein können. Auch solche Waren könnten aus dem Verkehr gezogen werden; zumindest könnten Kontrollmaßnahmen durchgeführt werden, um zu prüfen, ob die Waren sich noch in einem verkaufsfähigen Zustand befinden.

Eine Überprüfung, ob Schwellwerte, z. B. Temperaturschwellwerte oder Beschleunigungsschwellwerte überschritten wurden, kann in der Einrichtung erfolgen, oder in dem externen Rechner.

Schwellwerte für Temperaturen oder Schwellwerte für Beschleunigungen könnten in der Einrichtung gespeichert sein. Die Einrichtung könnte selbstständig prüfen, falls es zu einer Überschreitung eines Schwellwertes kommt. Die Einrichtung kann dann entsprechende Warnsignale emittieren, die von einem externen Rechner empfangen würden, der dann alles weitere veranlasst.

Von der Erfindung ist aber auch umfasst, wenn die Schwellwerte nicht in der Einrichtung abgelegt sind, sondern nur im Zugriff des externen Rechners stehen und von der Einrichtung über den Transmitter nur Verläufe der Messwerte, wie beispielsweise Temperaturverläufe, oder Verläufe von Beschleunigungsmesswerten an den externen Rechner übermittelt werden.

Die zuvor erwähnte Differenzierungseinrichtung kann dazu ausgebildet sein, Unterschiede der Position des Ladungsträgers zu erkennen, abhängig davon, ob er sich in einem Lagerraum nahe des Verkaufsraumes oder im Verkaufsraum selbst befindet.

Diese Unterscheidung kann unterstützend zu der Erlangung hoch auflösender Positionsdaten, z. B. über ein speziell angepasstes GPS, dadurch getroffen werden, dass der Receiver z. B. Informationen darüber sammelt, welche mobilen Endgeräte sich wie häufig, wie lange und mit welchem Namen oder unter welchen Identitäten in unmittelbarer Nähe des Ladungsträgers befinden.

So ist beispielsweise, für den Fall, dass sich der Ladungsträger in einem Lagerraum der Verkaufsstätte befindet, anzunehmen, dass sich hier immer dieselben Personen, nämlich das dort arbeitende Personal, mit immer denselben mobilen Endgeräten über längere Verweildauern in der Umgebung des Ladungsträgers aufhalten oder bewegen. Befindet sich die Einrichtung mit dem Ladungsträger und dem Warendisplay hingegen in einem Verkaufsraum, werden dort infolge einer Vielzahl von den Verkaufsraum durchquerender und durchschreitender Kunden mobile Endgeräte mit kürzeren Verweildauern, in viel größerer Anzahl und mit geringeren Häufigkeiten wiederkehrender und identischer Namen oder Identitäten sich in unmittelbarer Nähe des Ladungsträgers aufhalten.

Diese Information kann die Einrichtung bei der Bestimmung oder bei der Überprüfung oder zur Bestimmung der exakten Position verwenden oder berücksichtigen.

Gemäß einer weiteren vorteilhaften Ausgestaltung der Erfindung umfassen die vom Receiver erhaltenen Informationen Daten aus der nachfolgend aufgeführten Gruppe von Informationen:
a) Informationen über die Namen und/oder Identitäten und/oder Seriennummern von in der Umgebung des Ladungsträgers befindlichen mobilen Geräten, und/oder
b) Informationen über die Häufigkeit der Anwesenheit von in der Umgebung des Ladungsträgers befindlichen mobilen Geräten, und/oder
c) Informationen über die Verweildauer von in der Umgebung des Ladungsträgers befindlichen mobilen Geräten, und/oder
d) Informationen über die Distanzen von in der Umgebung des Ladungsträgers befindlichen mobilen Geräten zu dem Ladungsträger, und/oder
e) Informationen über die Bewegungsgeschwindigkeit von in der Umgebung des Ladungsträgers befindlichen mobilen Geräten, und/oder
f) Informationen über die Zahl der in der Umgebung des Ladungsträgers befindlichen mobilen Geräten.

Aus den zuvor angegebenen, unterschiedlichen Arten von Informationen kann die Einrichtung, kann gegebenenfalls auch der externe Rechner, oder ein der Einrichtung nachgeschalteter Rechner, weitere Informationen herausarbeiten.

Gemäß der Erfindung weist die Einrichtung einen Umgebungssensor auf. Der Umgebungssensor kann die Umgebung des Ladungsträgers auf unterschiedliche physikalische Messarten hin prüfen, absuchen oder scannen. Beispielsweise kommen Vibrationssensoren, Näherungssensoren, optische Sensoren, akustische Sensoren, kapazitive oder induktive Sensoren, in Betracht, die beispielsweise Bewegungen von Bedienpersonen oder Fahrzeugen oder Gegenständen erfassen können, die sich dem Ladungsträger nähern oder sich an diesem entlang bewegen.

Auch aus diesen erfassten Umgebungsdaten heraus kann die Einrichtung z. B. Positionsdaten herleiten oder diese überprüfen und die Informationen bei der Positionsbestimmung verwenden.

Die erfassten Umgebungsdaten können bei Bedarf über den Transmitter von der Einrichtung an einen externen Rechner übermittelt werden.

Gemäß einer weiteren vorteilhaften Ausgestaltung der Erfindung ist vorgesehen, dass die Einrichtung die von der Vorrichtung zur Erfassung von Umgebungsdaten erhaltenen Daten zur Bestimmung der exakten Position des Ladungsträgers oder zur Überprüfung der exakten Position des Ladungsträgers verwendet oder bei der Bestimmung der exakten Position des Ladungsträgers berücksichtigt.

Gemäß einer weiteren vorteilhaften Ausgestaltung der Erfindung ist vorgesehen, dass die von der Vorrichtung zur Erfassung von Umgebungsdaten erhaltenen Daten Informationen aus der nachfolgend aufgeführten Gruppe von Informationen umfassen:
a) Informationen über die Namen und/oder Identitäten und/oder Seriennummern, z.B. Bluetooth-Adressen, von in der Umgebung des Ladungsträgers befindlichen mobilen Geräten, und/oder
b) Informationen über die Häufigkeit der Anwesenheit von in der Umgebung des Ladungsträgers befindlichen mobilen Geräten, und/oder
c) Informationen über die Verweildauer von in der Umgebung des Ladungsträgers befindlichen mobilen Geräten, und/oder
d) Informationen über die Distanzen von in der Umgebung des Ladungsträgers (10) befindlichen mobilen Geräten zu dem Ladungsträger, und/oder
e) Informationen über die Bewegungsgeschwindigkeit von in der Umgebung des Ladungsträgers befindlichen mobilen Geräten, und/oder
f) Informationen über die Zahl der in der Umgebung des Ladungsträgers befindlichen mobilen Geräten.

Gemäß einer weiteren vorteilhaften Ausgestaltung der Erfindung ist vorgesehen, dass der Ladungsträger zwischen zwei Füßen einen Eingriffsraum für Zinken einer Hebeeinrichtung z. B. eines Gabelstaplers, umfasst, wobei die Einrichtung oberhalb des Eingriffsraums angeordnet ist. Dies ermöglicht eine Unterbringung der Einrichtung an dem Ladungsträger, ohne die Funktionsweise des Ladungsträgers zu beeinträchtigen.

Gemäß einer weiteren vorteilhaften Ausgestaltung der Erfindung ist die Einrichtung in das Deck integriert oder in das Deck teilweise oder vollständig eingelassen. Dies ermöglicht eine besonders kompakte Bauweise des Ladungsträgers.

Gemäß einer weiteren vorteilhaften Ausgestaltung der Erfindung ist die Einrichtung innerhalb einer Hüllkontur des Ladungsträgers angeordnet. Die Einrichtung ragt also nicht aus der in Draufsicht durch die Längenabmessung und Breitenabmessung vorgegebene rechteckige Kontur der Palette, der sogenannten Hüllkontur, heraus. Dies ermöglicht eine unveränderte Handhabung des erfindungsgemäßen Ladungsträgers und des erfindungsgemäßen Warendisplays im Vergleich zu einem Ladungsträger des Standes der Technik.

Die Erfindung bezieht sich gemäß einem weiteren Aspekt auf ein Verfahren nach Anspruch 14.

Der Erfindung liegt die Aufgabe zugrunde, ein Verfahren anzugeben, mit dem ein Ladungsträger vielfältiger einsetzbar ist.

Die Erfindung löst diese Aufgabe mit den Merkmalen des Anspruches 14.

Bezüglich des Verständnisses der Merkmale dieses Anspruches wird zur Vermeidung von Wiederholungen auf die bezüglich der obigen Ansprüche geschilderten Vorteile und auf die Bedeutung der Merkmale verwiesen.

Die Erfindung bezieht sich des Weiteren auf ein Warendisplay nach Anspruch 15. Dieser Erfindung liegt die Aufgabe zugrunde, ein Warendisplay anzugeben, von dem Informationen abfragbar sind.

Die Erfindung löst diese Aufgabe mit den Merkmalen des Anspruches 15.

Bezüglich des Verständnisses der Merkmale dieses Anspruches wird zur Vermeidung von Wiederholungen auf die bezüglich der obigen Ansprüche geschilderten Vorteile und auf die Bedeutung der Merkmale verwiesen.

Weitere Vorteile der Erfindung ergeben sich aus den nicht zitierten Unteransprüchen sowie anhand der in den Zeichnungen dargestellten Ausführungsbeispiele der Erfindung. Darin zeigen:

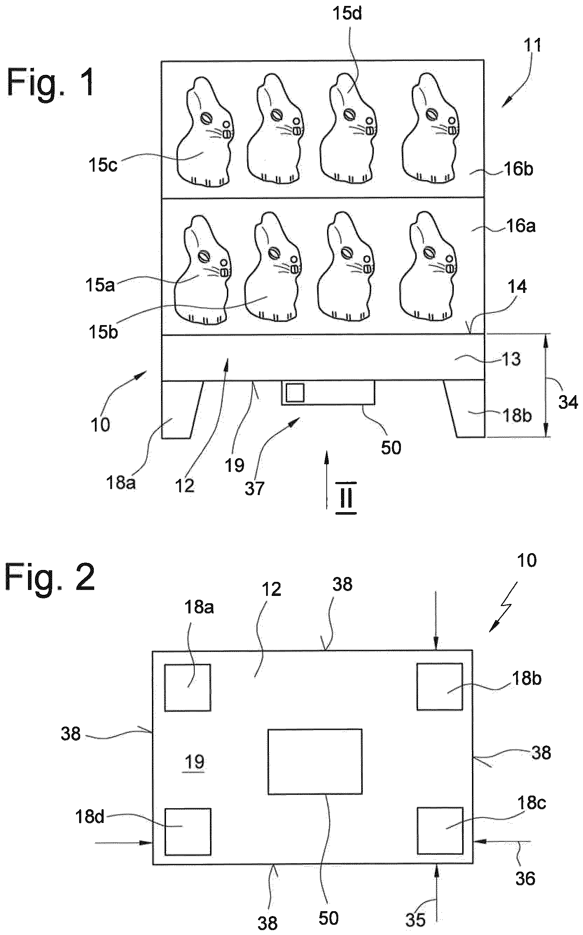

- Fig. 1: ein erstes Ausführungsbeispiel eines erfindungsgemäßen Ladungsträgers in Ausbildung eines Warendisplays, mit zwei, in Übereinander-Stapelanordnung vorgesehenen Kartonagen mit darin befindlichen Waren in Form von angedeuteten Schokoladen-Osterhasen in einer schematischen Seitenansicht, mit einer elektronischen Einrichtung, die an der Unterseite eines Decks des Ladungsträgers angeordnet ist,
- Fig. 2: in einer schematischen Darstellung gemäß Ansichtspfeil II in Fig. 1 den Ladungsträger der Fig. 1 in Unteransicht,

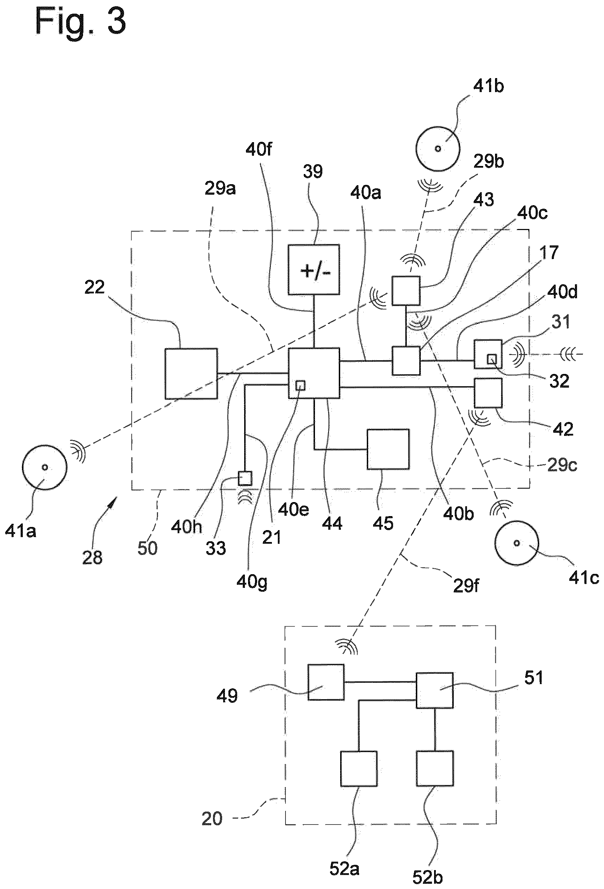

- Fig. 3: in einer schematischen blockschaltbildartigen Prinzipdarstellung ein Ausführungsbeispiel einer Einrichtung eines erfindungsgemäßen Ladungsträgers, wobei die Einrichtung eine Vorrichtung zur Erfassung von Umgebungsdaten in Form eines Receivers und eine weitere Vorrichtung zur Erfassung von Umgebungsdaten in Form eines Umgebungssensors aufweist, und wobei drei Sendemasten eines Standort-Bestimmungssystems dargestellt sind, und ein externer Rechner, wobei die Sendemasten und der externe Rechner entlang von Funkstrecken mit der Einrichtung in Verbindung bringbar sind,

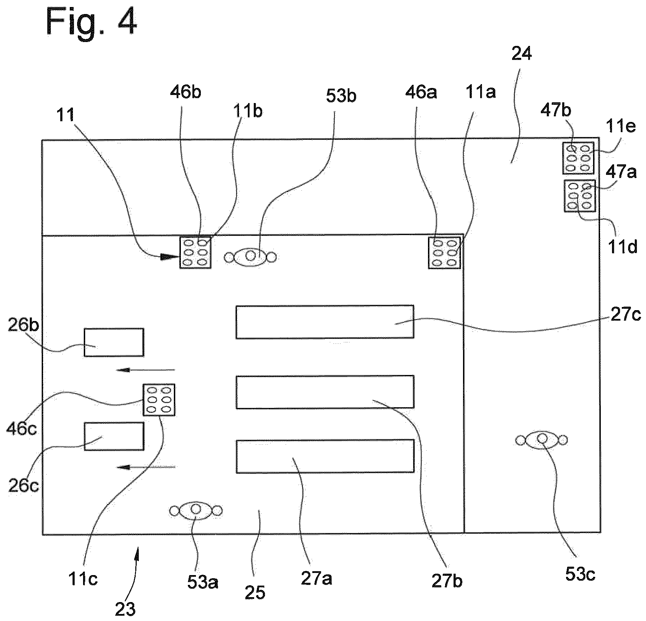

- Fig. 4: in einer schematischen Prinzipdarstellung nach Art eines Bauplans in teilgeschnittener Draufsicht eine Verkaufsstätte eines Supermarktes mit zwei Kassen, drei Regalen und drei erfindungsgemäßen Ladungsträgern in unterschiedlichen Positionen in dem Verkaufsraum sowie einen benachbart des Verkaufsraums angeordneten Lagerraum und zwei in dem Lagerraum angeordnete Ladungsträger, und

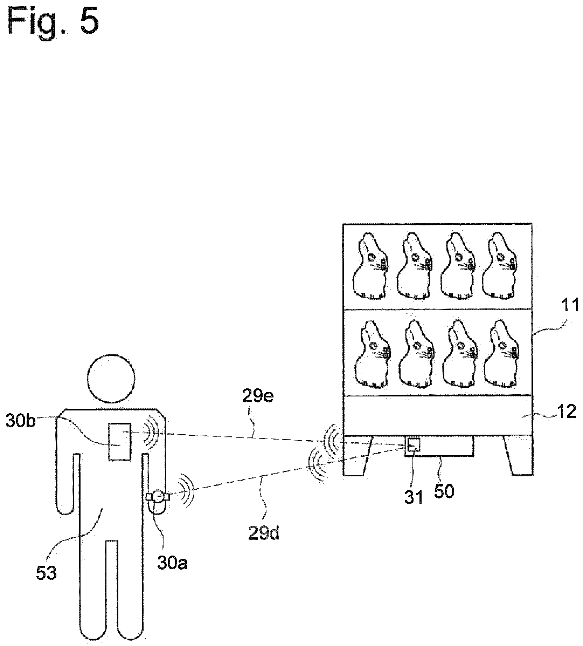

- Fig. 5: in einer schematischen, perspektivischen Prinzipdarstellung einen erfindungsgemäßen Ladungsträger, als Bestandteil eines Warendisplays in einer Darstellung gemäß Fig. 1, und eine Person, die zwei mobile Endgeräte in Form eines Smartphones und einer kommunikationsfähigen Watch oder Armbanduhr am Handgelenk trägt.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

In den Zeichnungen ist ein Ausführungsbeispiel eines erfindungsgemäßen Ladungsträgers in seiner Gesamtheit mit 10 bezeichnet.

Der Ladungsträger hat sich grundsätzlich, z. B. bezüglich seiner Abmessungen, seinem Erscheinungsbild, seiner Materialwahl und seiner Einsatz- und Funktionsweise, gegenüber einem Ladungsträger des Standes der Technik, wie er von der Anmelderin seit geraumer Zeit umfangreich verwendet wird, nicht verändert.

Der bekannte Ladungsträger 10 ist beispielweise in der EP 2 487 117A1 dargestellt und beschrieben. Es wird zur Vermeidung von Wiederholungen auf die dortigen Ausführungen verwiesen.

Der erfindungsgemäße Ladungsträger 10 dient der Bereitstellung eines Warendisplays, das in den Fig. 1 und Fig. 5 dargestellt ist, und mit dem Bezugszeichen 11 bezeichnet ist.

Der Ladungsträger umfasst ein Deck 13, das auf der Oberseite eine Auflagefläche 14 bereitstellt, auf der die Waren 15 anordnenbar sind. Der Ladungsträger umfasst eine Höhe 34, eine Breite 35 und eine Länge 36.

Die Breite 35 und die Länge 36 entsprechen jeweils der Hälfte der Länge und der Hälfte der Breite einer Standard-Europalette, so dass der Ladungsträger 10 bei den Ausführungsbeispielen in den Figuren als Viertelpalette 12 ausgebildet ist. Er besteht insbesondere aus Kunststoff.

Das Deck 13 kann insbesondere in den Figuren nicht dargestellte Versteifungsstrukturen aufweisen.

Die Auflagefläche 14 für die Waren 15 ist im Wesentlichen eben ausgebildet, bis auf Vorsprünge oder Ausnehmungen oder gegebenenfalls angeordnete Noppen zur Erzielung einer Verrutschsicherheit.

Die auf dem Ladungsträger 10 anzuordnenden, nur schematisch angedeuteten Waren 15 sind z. B. Aktionswaren, z. B. jahreszeitenabhängige Waren, wie Osterhasen aus Schokolade oder Weihnachtsmänner aus Schokolade. Die Waren 15a, 15b sind in lediglich angedeuteten Kartonagen 16a, 16b angeordnet.

Das Warendisplay 11 wird im Werk des Herstellers der Waren 15 konfektioniert, gegebenenfalls mit einem Umreifungsmittel verbunden und zu einer Verkaufsstätte transportiert.

Dort wird die Ware zu einem vorgegebenen Zeitpunkt - oder bei Bedarf oder bei Gelegenheit - in den Verkaufsraum gestellt. Die Kartonagen werden dann z. B. teilweise geöffnet und die Waren können abverkauft werden. Der aus Kunststoff bestehende Ladungsträger 10 kann nach erfolgtem Abverkauf für eine erneute Verwendung rückgeführt werden.

Der Ladungsträger umfasst Füße 18a, 18b, 18c, 18d, die jeweils in den Eckbereichen des Ladungsträgers angeordnet sind. Zwischen jeweils zwei Füßen befindet sich ein Eingriffsraum 27 für nicht dargestellte Zinken eines ebenfalls nicht dargestellten Gabelstaplers oder einer anderen Hebeeinrichtung.

An der Unterseite des Decks 13, in dieses teilweise eingelassen, bei einem alternativen, in den Figuren nicht dargestellten Ausführungsbeispiel vollständig darin eingelassen, ist erfindungsgemäß eine Einrichtung 50 angeordnet.

Diese ist in den Fig. 1, 2 und 5 lediglich schematisch dargestellt.

Die Einrichtung 50 ragt nicht in die Auflagefläche 14 hinein und beeinträchtigt diese daher nicht. Außerdem ist wichtig, dass die Einrichtung 50 im montierten Zustand nicht aus der Hüllkontur 38 des Ladungsträgers nach außen hinaus vorragt.

Vorteilhafterweise ist die Einrichtung 50 oberhalb des Eingriffsraums 37 angeordnet, und stört insofern eine Einfahrbewegung von Zinken eines Gabelstaplers nicht.

Besonders vorteilhaft können einige der Versteifungs- und Verstrebungswände im Deck 13 entfallen und durch die Einrichtung 50 ersetzt sein. Dabei besteht auch Möglichkeit, die erfindungsgemäße Einrichtung 50 nachträglich in eine bereits gefertigte, hergestellte Viertelpalette einzusetzen.

Bei dem Ausführungsbeispiel der Fig. 1 ragt die Einrichtung 50 von der Unterseite 19 des Decks 13 hinaus nach unten vor. Bei anderen Ausführungsbeispielen, die in den Figuren nicht dargestellt sind, ragt die Einrichtung 50 nicht von der Unterseite 19 hervor, sondern ist insbesondere bündig in die Unterseite 19 eingelassen.

Anhand des nicht maßstäblichen Prinzip-Blockschaltbilds der Fig. 3 soll zunächst die Einrichtung 50, sodann ein externer Rechner 20 und schließlich ein Standortbestimmungssystem 28 erläutert werden:
Fig. 3 zeigt zunächst die schematisch angedeutete Einrichtung 50. Der Ladungsträger 10, an dem die Einrichtung 50 angeordnet ist, ist in Fig. 3 der Übersichtlichkeit halber nicht dargestellt.

Das Ausführungsbeispiel der Einrichtung 50 umfasst gemäß Fig. 3 eine z. B. einen Mikroprozessor umfassende Steuerung 44, die über eine Signal- oder Spannungsversorgungsleitung 40f mit einer Spannungsversorgung 39 verbunden ist. Die Spannungsversorgung 39 kann beispielsweise ein Akku oder eine Batterie sein. Die Einrichtung 50 wird von der Spannungsversorgung 39 mit Betriebsspannung oder mit Betriebsstrom versorgt.

Bestandteil der Einrichtung 50 ist darüber hinaus eine Ortungsvorrichtung 17. Diese kann mit der Steuerung 44 über eine Signalleitung 40a verbunden sein. Die Ortungsvorrichtung 17 weist bei dem Ausführungsbeispiel ein Sende-/Empfangsmodul 43 auf, das über eine Signalleitung 40c an die Ortungsvorrichtung 17 angebunden ist.

Bei anderen, in den Figuren nicht dargestellten Ausführungsbeispielen der Erfindung ist eine solche Ortungsvorrichtung 17 nicht vorgesehen.

Bei diesen weiteren Ausführungsbeispielen ist eine Vorrichtung zur Erfassung von Umgebungsdaten, beispielsweise in Form eines Receivers 31 und/oder in Form eines Umgebungssensors 33, unmittelbar mit der Steuerung 44 der Einrichtung 50 verbunden.

Bei dem Ausführungsbeispiel der Fig. 3 ist die Ortungsvorrichtung 17 über eine Signalleitung 40d mit dem Receiver 31 verbunden. Dieser kann z. B. einen Bluetooth-Sniffer 32 aufweisen.

Bei alternativen Ausführungsbeispielen der Erfindung, die in den Zeichnungen nicht dargestellt sind, weist die erfindungsgemäße Einrichtung 50 nur einen Receiver 31 auf.

Mit der Steuerung 44 über eine Signalleitung 40e verbunden ist ein Rechner 45. Die Steuerung 44 kann einen in Fig. 3 nicht dargestellten eigenen Prozessor aufweisen und/oder eine gesonderte Rechnereinheit 45. Auch elektronische Speicherelemente können an der Einrichtung 50 vorgesehen sein.

Bei dem Ausführungsbeispiel der Fig. 3 ist an die Steuerung 44 darüber hinaus ein Umgebungssensor 33 über eine Signalleitung 40g angeschlossen. Der Umgebungssensor 33 ist optional und kann alternativ oder auch zusätzlich zu dem Receiver 31 vorgehen sein.

Fig. 3 deutet darüber hinaus einen externen Rechner 20 an, der z. B. in einen Waren-Produktions-Prozess eingebunden sein kann. Dieser ist distanziert von der Einrichtung 50 angeordnet, gegebenenfalls, viele, unter Umständen auch viele hundert Kilometer, von dem Ladungsträger 10 entfernt und damit auch entsprechend weit von der Einrichtung 50 entfernt. Der Rechner 20 umfasst ebenfalls ein Sende-/Empfangsmodul 49, eine Steuerung 51 sowie Bearbeitungsmodule 52a und 52b, die über nicht einzeln bezeichnete Signalleitungen mit der Steuerung 51 verbunden sind.

Schließlich sind in Fig. 3 drei Funkmasten bzw. Sendemasten 41a, 41b, 41c dargestellt, die Bestandteil eines Standort-Bestimmungssystems 28 sind. Diese können z. B. von fest installierten Sendeantennen- oder -masten gebildet sein.

Angemerkt sei an dieser Stelle, dass die Fig. 3 nicht maßstäblich ist:
Die Entfernung zwischen der Einrichtung 50 und den drei Sendemasten 41a, 41b, 41c kann selbstverständlich viele, viele zehn, oder sogar viele hunderte Kilometer umfassen, wobei die Einrichtung 50 Abmessungen von nur wenigen Millimetern oder wenigen Zentimetern aufweisen kann.

Auch der Abstand zwischen dem externen Rechner 20 und der Einrichtung 50 kann, anders als in der nicht maßstäblichen Fig. 3 dargestellt, sehr groß sein und auch viele oder viele hundert Kilometer betragen.

Bei einer weiteren alternativen Ausgestaltung der Erfindung sind anstelle der Sendemasten nicht dargestellte Satelliten als Bestandteil des Standort-Bestimmungssystems 28 vorgesehen, die im Prinzip gleichermaßen oder analog oder ähnlich funktionieren.

Das Signalsende-/Empfangsmodul 43 kann entlang von Funkstrecken 29a, 29b, 29c zu den Sendemasten 41a, 41b, 41c eines Standortbestimmungssystems 28 eine Funkstrecke oder Funkverbindung aufbauen oder jedenfalls Signale empfangen. Dabei ist eine unidirektionale oder eine bidirektionale Datenübertragung möglich.

Von der Erfindung ist auch umfasst, wenn das Modul 43 Signale lediglich empfängt. Beispielsweise können bei einem Ausführungsbeispiel der Erfindung von dem Modul 43 Laufzeitunterschiede der von den Sendemasten 29a, 29b, 29c oder von den entsprechenden Satelliten emittierten an dem Modul 43 eintreffenden Signale ermittelt und gemessen werden. Die Ortungseinheit 17 ist jedenfalls in der Lage, aus den von dem Modul 43 empfangenen Informationen eine exakte Positionsbestimmung des Ladungsträgers 10 vorzunehmen. Eine solche Positionsbestimmung kann z. B. nach einem an sich bekannten Prinzip, wie z. B. einem Triangular-Positionsbestimmungsprinzip, erfolgen.

Bei dem Ausführungsbeispiel der Fig. 3 wird eine Positionsbestimmung mit einer Auflösung vorgenommen, die über die Auflösungsgenauigkeit eines herkömmlichen GPS-Systems, wie es beispielsweise seit den 1980-iger Jahren im Einsatz ist, weit hinausgeht. Es werden hierzu erfindungsgemäß z. B. spezielle, hoch ortsauflösende Standortbestimmungssysteme 28 eingesetzt.

Die mit der Ortungseinheit 17 verbundene Steuerung 44 kann veranlassen, dass die erhaltene exakte Positionsangabe über einen Transmitter 42, also z. B. über ein Funksignal-Sende- und Empfangsmodul 42, entlang einer angedeuteten Funkstrecke 29f an das Empfangsmodul 49 des externen Rechners 20 übermittelt wird. Eine solche Datenübertragung kann beispielsweise über ein GSM-Netz oder über eine andere, geeignete, drahtlose Funkverbindung erfolgen.

Eine Steuerung 51 des externen Rechners 20 kann diese Information nach Erhalt weiterverarbeiten.

Wie genau die Einrichtung 50 eine Bestimmung der exakten Position des Ladungsträgers 10 vornimmt und welche Aufgabe die Differenzierungsvorrichtung 22 besitzt, die über eine Signalleistung 40g mit der Steuerung 44 verbunden ist, wird später erläutert.

Anhand der Fig. 4 soll zunächst die Situation in dem Verkaufsraum 25 eines Handelsgeschäftes 23 erläutert werden:
Fig. 4 zeigt ein im Wesentlichen rechteckiges Gebäude in Draufsicht. Dieses ist unterteilt in einen etwa rechteckförmigen Verkaufsraum 25 des Handelsgeschäftes 23 und in einen etwa L-förmigen, sich seitlich an den Verkaufsraum 25 anschließenden Lagerraum 24.

Das Handelsgeschäft 23 kann z. B. ein herkömmlicher Supermarkt sein, der regelmäßig mit Waren beliefert wird, die nach der Ankunft zunächst in dem Lagerraum 24 vorgehalten werden. Nicht dargestellt sind in Fig.4 beispielweise Kühlräume in dem Lagerraum 24.

Die Aktionswaren, die sich typischerweise auf einem Warendisplay 11 befinden, erfordern aber in der Regel keine Kühlung.

Der Verkaufsraum 25 umfasst beim Ausführungsbeispiel der Fig. 4 drei dargestellte Regale 27a, 27b, 27c, die mit nicht dargestellten, regalfesten Waren gefüllt. Darüber hinaus zeigt der Verkaufsraum 25 zwei Kassen 26a, 26b. Die dargestellten Personen 53a und 53b befinden sich im Verkaufsraum 25. Eine Person 53c befindet sich im Lager 24.

Gemäß Fig. 4 sind fünf Warendisplays 11a, 11b, 11c, 11d, 11e dargestellt.

Zwei Warendisplays 11d und 11e befinden sich im Lagerraum 24. Sie nehmen dort die Positionen 47a, 47b im Lagerraum ein. Diese Warendisplays 11d und 11e mögen gerade erst angeliefert worden sein.

Im Verkaufsraum 25 sind drei Warendisplays 11a, 11b, 11c angeordnet. Diese nehmen eine erste Position 46a, eine zweite Position 46b und eine dritte Position 46c ein.

Erst, wenn sich die entsprechenden Warendisplays 11a, 11b, 11c in dem Verkaufsraum 25 befinden, können einkaufende Personen 53a, 53b die Waren 15 vom Display 11 entnehmen und kaufen.

Es kann für den Hersteller der Waren 15 von Interesse sein, zu erfahren, wann das Warendisplay 11 den Lagerraum 24 verlassen hat bzw. wann es den Verkaufsraum 25 erreicht hat.

Dieser Zeitpunkt ist dem Hersteller der Waren 15 nicht bekannt. Der Zeitpunkt hängt von einer Vielzahl von Gegebenheiten vor Ort ab, gegebenenfalls von den handelnden Personen, von der Verkaufssituation vor Ort, von der Zuverlässigkeit des Personals, von aktuellen klimatischen Bedingungen, wie Temperaturen, Wetterkapriolen und dergleichen.

Bei dem Ausführungsbeispiel der Fig. 3 ist die Einrichtung 50 ist in der Lage, festzustellen, wann der Ladungsträger 10 den Verkaufsraum 25 erreicht hat.

Gemäß einer Ausführungsform leistet der Ladungsträger 10 dies durch eine Ortungsvorrichtung 17, die eine derartig hohe Ortauflösung bereitstellt, dass Unterschiede beispielsweise zwischen der Position 47a oder 47b einerseits und der Position 46a oder 46b andererseits erkennbar und feststellbar sind.

Hierfür umfasst die Einrichtung 50 eine Differenzierungsvorrichtung 22, die diese unterschiedlichen Positionen erkennen kann.

Eine Erkennung der exakten Position des Ladungsträgers 10 kann bei dieser Variante der Erfindung beispielsweise dadurch erfolgen, dass dies mittels einer exakten, sehr genauen Positionsbestimmung möglich ist.

Die Differenzierungsvorrichtung 22 kann auch Bestandteil des externen Rechners 20 sein oder mit dem externen Rechner 20 kooperieren. Der externe Rechner 20 - oder die Differenzierungsvorrichtung 22 - kann zur Bestimmung der exakten Position beispielsweise auf Baupläne oder Ortsinformationen der Verkaufsstätte 25 zurückgreifen. Dafür müssen diese entsprechenden Informationen zuvor ermittelt und erfasst worden und in einem Speicher der Einrichtung 50 oder in einem Speicher des externen Rechners abgelegt sein. Die Differenzierungsvorrichtung 22 und/oder der externe Rechner müssen auf diese Informationen zugreifen können.

Der externe Rechner 20 kann, z. B. in Kooperation mit der Differenzierungsvorrichtung 22, oder auf Grundlage der Vorarbeiten, die die Differenzierungsvorrichtung 22 geleistet hat, eine endgültige Differenzierung treffen.

Die Differenzierungsvorrichtung 22 kann bei einem Ausführungsbeispiel der Erfindung die beiden unterschiedlichen Positionen des Ladungsträgers, eine erste Position des Ladungsträgers in einem Lager und eine zweite Position des Ladungsträgers in einem Verkaufsraum, erkennen. Bei dieser Variante kann die Differenzierungsvorrichtung diese beiden Positionen voneinander unterscheiden und alleinig, oder in Kombination mit der Steuerung der Einrichtung 50, diese erarbeitete Information an den externen Rechner 20 übermitteln.

Bei einer Variante der Erfindung kann die Differenzierungsvorrichtung unterschiedliche Daten erheben oder erfassen, die den unterschiedlichen Positionen des Ladungsträgers, einerseits in einem Lager, und andererseits in einem Verkaufsraum des Geschäftes, voneinander unterscheidbar machen, wobei die Feststellung, wo sich der Ladungsträger tatsächlich befindet, erst von dem externen Rechner getroffen wird.

Die Differenzierungsvorrichtung 22 kann, um die Differenzierung vornehmen zu können, bei einer weiteren Variante der Erfindung auch mit einem Receiver 31 und/oder mit einem Umgebungssensor 33 kooperieren.

Eine solche Kooperation der Differenzierungsvorrichtung 22 mit einem Receiver oder mit einem Umgebungssensor 33 kann beispielsweise umfassen, dass von einem Receiver 31 oder von einem Umgebungssensor 33 Umgebungsdaten erfasst werden, und damit Informationen erhalten werden, die eine Schlussfolgerung zulassen, ob sich der Ladungsträger bereits in einem Verkaufsraum 25 befindet, oder noch in einem Lager 24.

Diese erfassten Umgebungsdaten können aus einer Vielzahl von möglichen, als Kriterium für eine solche Fallunterscheidung heranziehbaren physikalischen Größen, getroffen werden.

Ein Umgebungssensor 33 kann beispielsweise vorgesehen sein, um Bewegungen des Ladungsträgers zu detektieren, z. B. über Vibrationen oder regelmäßige Abfragen von Positionsinformation.

Wurden beispielsweise bestimmte Bewegungen eines Warendisplays 11 festgestellt, kann die Differenzierungsvorrichtung 22 eine Aussage darüber treffen, ob der Ladungsträger 10 innerhalb des Lagerraumes 24 bewegt wurde oder aus dem Lagerraum in die Verkaufsstätte 25 hin verlagert wurde.

Der Umgebungssensor 33 kann beispielsweise auch einen optischen Sensor aufweisen, der bestimmte Helligkeitswerte und Veränderungen oder Helligkeitsmuster abfragt. Damit kann beispielsweise festgestellt werden, dass in Lagerräumen andere, zu detektierende Helligkeitsmuster eintreten, als in Verkaufsräumen.

Weiter alternativ kann der Umgebungssensor 33 auch einen Temperatursensor aufweisen. Hier kann gemäß der Erfindung durch Temperaturmessungen eine Entscheidung getroffen werden, ob sich der Ladungsträger noch in einem Lagerraum oder bereits in einem Verkaufsraum befindet.

Gemäß einer vorteilhaften Ausgestaltung der Erfindung umfasst die Einrichtung zusätzlich auch einen Receiver 31.

Ein solcher Receiver stellt eine besondere Art von Umgebungssensor 33 dar. Mit einem Receiver können drahtlos übertragbare Signale, also Funksignale, oder andere elektro-magnetische Wellen, empfangen werden. Gegebenenfalls kann ein solcher Receiver auch Signale emittieren, beispielsweise, um elektrische oder elektronische Geräte zu veranlassen, Informationen zu senden.

Mit dem Receiver können erfindungsgemäß Daten von mobilen Endgeräten 30a, 30b detektiert werden.

Zwei mobile Endgeräte 30a, 30b sind in Fig. 5 dargestellt und dort mit 30a und 30b bezeichnet. Ein erstes mobiles Endgerät 30a ist beispielsweise eine an dem Handgelenk einer Person 53 getragene Uhr, eine sogenannte Watch oder Smartwatch.

Ein alternatives mobiles Endgerät 30b ist beispielsweise ein in Fig. 5 angedeutetes Smartphone, das z. B. in der Hemdtasche einer Person 53 getragen wird.

Auch andere mobile Endgeräte, sowohl von in dem Geschäft 23 beschäftigten oder dort arbeitenden Personen, als auch von in dem Verkaufsraum 25 einkaufenden Personen 53, kommen in Betracht. Hierzu gehören jegliche elektronischen, insbesondere kommunikationsfähigen, Geräte, die Menschen in der Regel mit sich nehmen, seien es z. B. bluetoothfähige Earpods, oder andere Gadgets, Laptops, elektronische Halsketten, etc.

Die mobilen Endgeräte 30a, 30b können beispielsweise über WLAN, Bluetooth, NFC oder andere geeignete Funk-Protokolle, wenn sie in den unmittelbaren Nahbereich des Receivers 31 der Einrichtung 50 gelangen, erlauben, dass zumindest temporär Verbindungen entlang von Funkstrecken 29d, 29e gemäß Fig. 5 zu dem Receiver 31 aufgebaut werden.

Die abzufragenden mobilen Endgeräte 30 können jedenfalls dazu ausgebildet sein, ihre Präsenz gegenüber dem Receiver zu offenbaren.

Der Receiver 31 kann beispielsweise die Namen der Endgeräte 30a, 30b, die Identifikationsnummer, die Distanz zu der Einrichtung 50, die Verweildauer in bestimmten Erfassungsbereichen, die Häufigkeit einer Präsenz und auch die Bewegungsgeschwindigkeiten erfassen.

Ganz allgemein kann der Receiver 31 also Informationen von mobilen, elektronischen Geräten 30, 30a, 30b erfassen.

Die erfassten Informationen können von der Einrichtung 50 aufgenommen und verarbeitet werden. Beispielsweise können die Informationen sortiert, bewertet, analysiert, mit gespeicherten Werten verglichen werden, aufsummiert oder auf eine andere Weise verarbeitet werden.

Aus diesen erhaltenen und gegebenenfalls weiterverarbeiteten Informationen kann die Steuerung 44 oder die Differenzierungsvorrichtung 22 den Schluss ziehen, ob es sich um eine Umgebung des Ladungsträgers 10 handelt, die einem Verkaufsraum 25 entspricht, oder es sich um eine Umgebung handelt, die einem Lagerraum 24 entspricht.

Beispielsweise kann die Einrichtung 50 annehmen, dass, wenn eine Vielzahl unterschiedlicher und nur sehr kurzzeitiger Anmeldungsvorgänge mobiler Endgeräte 30a, 30n an dem Receiver 31 stattfindet, die Einrichtung 50, und damit auch der Ladungsträger 10 in einem Verkaufsraum 25 steht.

Werden hingegen immer nur wenige mobile Endgeräte, aber dafür häufig dieselben mobilen Endgeräte, im unmittelbaren Nahbereich der Einrichtung 50 detektiert, kann daraus geschlossen werden, dass sich der Ladungsträger 10 noch im Lagerraum 24 befindet, weil hier die in dem Geschäft beschäftigten Personen arbeiten und nur diese Personen in den Nahbereich der Einrichtung 50 gelangen können.

Die Differenzierungsvorrichtung 22 oder die Einrichtung 50 oder der externe Rechner 20 kann diese Informationen bei der Positionsbestimmung mit heranziehen.

Auf diese Weise kann die Einrichtung 50 feststellen, ob sich der Ladungsträger 10, und damit auch das Warendisplay 11, in dem Verkaufsraum 25 befindet.

Sobald die Einrichtung 50 feststellt, dass der Ladungsträger 10 in den Verkaufsraum 25 verbracht worden ist, oder sobald eine Erfassung der Daten, auf deren Basis eine Feststellung getroffen werden kann, erfolgt ist, kann ein entsprechendes Feststellungs-Signal generiert werden und über den Transmitter 42 an einen externen Rechner 20 übertragen werden.

Eine Übertragung des Feststellungssignals kann unverzüglich oder unmittelbar nach dem Erreichen des Verkaufsraumes 25 veranlasst werden.

Von der Erfindung ist aber auch umfasst, wenn eine solche Übermittlung eines Feststellungsignals nur auf Abfrage durch den externen Rechner 20 erfolgt oder regelmäßig, oder zu vorbestimmten Zeitpunkten, z. B. mehrmals täglich oder einmal täglich.

Der externe Rechner 20, der die Information erlangt, dass ein bestimmtes Warendisplay 11 einen Verkaufsraum 25 eines Handelsgeschäftes 23 erreicht hat, kann, insbesondere aus einer Summe und einer Vielzahl entsprechender Informationen, beispielsweise einen Produktionsplanungsprozess initiieren oder korrigieren, und z. B. eine Nachproduktion veranlassen.

Angemerkt sei, dass vorteilhaft der Ladungsträger 1 eine eindeutige ID aufweist. Eine solche Identitätsinformation 21 ist in Fig. 1 angedeutet.

Diese kann von dem Transmitter 42 an den externen Rechner 20 mit übermittelt werden. Es kann sich hierbei beispielsweise um eine eindeutige Seriennummer handeln.

Die Einrichtung übermittelt also diese eindeutige Kennung zusammen mit einer Positionsinformation an den externen Rechner.

Der externe Rechner kann erfasste Umgebungsdaten, sowie gegebenenfalls auch Positionsinformationen und die ID-Kennung kombiniert verarbeiten, und gegebenenfalls dem Verkaufsraum 25 eine Information zuordnen.

Bei einer Ausführungsform der Erfindung ist eine Übermittlung von ID-Kennungen 21 nicht erforderlich. Hier kann der externe Rechner 20 bei Bedarf aus der Positionsinformation zu dem Warendisplay 11 aufgrund seiner Nähe zu einem bestimmten Verkaufsraum 25 z. B. schließen, ob Nachproduktionen initiiert werden müssen.

Bei dem zuletzt beschriebenen Ausführungsbeispiel war die Vorrichtung zum Erfassen von Umgebungsinformationen in Form des Receivers 31 und des Umgebungssensors 33 vornehmlich dazu ausgebildet, bei einer Positionsbestimmung des Ladungsträgers mitzuwirken.

Von der Erfindung sind aber auch Ausführungsbeispiele mit umfasst, bei denen die erfassten Umgebungsdaten gänzlich andere Sachverhalte und Anwendungen als eine Positionsbestimmung betreffen:
Von der Erfindung sind z. B. auch Ausführungsbeispiele umfasst, bei denen die Einrichtung 50 des Ladungsträgers 10 an einen externen Rechner 20 keine Information über die Position des Ladungsträgers 10 übermitteln, sondern andere, erfasste Umgebungsdaten übermittelt.

Beispielsweise kann über den Umgebungssensor 33 kontinuierlich, laufend oder regelmäßig eine Temperaturmessung erfolgen, und Informationen über die gemessene Temperatur oder über einen gemessenen Temperaturverlauf können über den Transmitter 42 an den externen Rechner 20 übermittelt werden.

Diese Information ist insbesondere wichtig, um zu überprüfen, ob eine festgelegte Schwelltemperatur überschritten wurde. Diese kann von der Art der Aktionswaren, die sich auf dem Ladungsträger befinden, abhängig sein. Beispielsweise bei Schokolade enthaltenden Waren können Schwelltemperaturen oberhalb des Schmelzpunktes festgelegt werden.

Werden diese Schwelltemperaturen überstiegen oder deutlich überstiegen, kann diese Information von der Einrichtung 50 an den externen Rechner 20 übermittelt werden. Dann kann beispielsweise ein Warnsignal generiert werden, und eine Überprüfung veranlasst werden, ob die Aktionswaren überhaupt noch für einen Verkauf geeignet sind.

Der Umgebungssensor 33 kann auch Umgebungsdaten in Form von Beschleunigungsinformationen erfassen. Hier kann der Umgebungssensor 33 laufend, kontinuierlich oder regelmäßig Beschleunigungen messen, die auf den Ladungsträger 10 ausgeübt werden.

Durch messen von Beschleunigungswerten, oder auch durch Messung einer Neigung oder einer Lage oder einer Orientierung im Raum mittels eines Lagesensors kann beispielsweise überprüft werden, ob der Ladungsträger mit darauf angeordneten Waren einmal umgefallen ist, oder gefallen ist oder gestürzt ist. Auch bei Überschreitung vorgegebener Schwellwerte für die zu messende Beschleunigung oder bei Überschreitung vorgegebener Schwellwerte für zu messende Impulse oder bei Überschreitung vorgegebener Schwellwerte für zu messende Neigungswinkel kann beispielsweise eine visuelle oder manuelle Überprüfung durch das Verkaufspersonal in der Verkaufsstätte - oder durch das Transport-Personal, das für den Transport verantwortlich ist, veranlasst werden, um sicherzustellen, dass die Waren noch für einen Verkauf geeignet sind.

Schließlich kann bei einer weiteren Ausgestaltung der Erfindung die Vorrichtung zur Erfassung von Umgebungsdaten in Form eines Receivers 31 Informationen von in der Umgebung des Ladungsträgers 10 befindlichen mobilen Geräten 30a, 30b abfragen, und infolge dieser Abfrage gewonnene Informationen an den externen Rechner 20 übermitteln. Dieser kann dann aus den ermittelten Informationen beispielsweise feststellen, ob der Ladungsträger mit den darauf befindlichen Aktionswaren an einer bestimmten, wünschenswerter Weise prominenten Position innerhalb eines Verkaufsraums angeordnet worden ist, also in einer Position, in der dem Ladungsträger viele Personen nahe kommen, also viele Träger von mobilen Geräten.

Auch kann die Verweildauer von elektronischen Geräten in der Nähe oder in der Umgebung des Ladungsträgers festgestellt werden und analysiert werden. Es kann also eine Aussage darüber getroffen werden, ob sich viele Personen für eher längere Zeit oder für eher kürzere Zeit im Erfassungsbereich des Ladungsträgers aufhalten. Auch können Bewegungsprofile erstellt und ausgewertet werden.

Von Interesse für den Warenhersteller ist unter Umständen auch die Information, ob bestimmte Aktionswaren, insbesondere in Bezug zu bestimmten Werbe- oder Informationstafeln, bestimmte, wünschenswerter Weise längere, Verweilzeiten der Kunden zur Folge haben.

Auch kann durch Erfassung der mobilen Geräte im Umgebungsbereich des Ladungsträger überprüft werden, ob geschaltete Werbung, z. B. in Print-Medien, sozialen Medien oder Rundfunk- und Fernsehwerbung, messbaren Einfluss auf ein Bewegungsverhalten von Kunden in Bezug zu dem Ladungsträger mit der Aktionsware entfaltet.

## Patentansprüche

1. Ladungsträger (10), insbesondere für ein Warendisplay (11) in Form einer insbesondere aus Kunststoff bestehenden Palette, insbesondere ausgebildet als Viertelpalette (12), umfassend ein Deck (13) mit einer Auflagefläche (14) für Waren (15), an dessen Unterseite (19) eine Mehrzahl von Füßen (1a, 18b, 18c, 18d) angeordnet ist, wobei der Ladungsträger eine elektronische Einrichtung (50) mit einer autonomen Spannungsversorgung (39) umfasst, wobei der Einrichtung (50) eine Vorrichtung (31,33) zu Erfassung von Umgebungsdaten zugehörig ist, mit der Daten und/oder Messwerte aus der Umgebung des Ladungsträger ermittelbar sind, wobei die Einrichtung (50) einen Transmitter (42) zur insbesondere autarken Datenfernübertragung aufweist, mit dem die erfassten Umgebungsdaten oder davon abgeleitete Informationen sowie insbesondere eine Identitätsinformation über die Identität des Ladungsträgers an einen externen Rechner übermittelbar sind.

2. Ladungsträger nach Anspruch 1, **dadurch gekennzeichnet, dass** die Vorrichtung zur Erfassung von Umgebungsdaten einen Receiver (31) für einen Empfang von Daten, insbesondere für einen Empfang von Funksignalen, umfasst, insbesondere einen Sniffer, weiter insbesondere einen Bluetooth-Sniffer.

3. Ladungsträger nach Anspruch 2, **dadurch gekennzeichnet, dass** der Receiver (31) dazu ausgebildet ist, Daten von mobilen elektrischen Geräten 30a, 30b, insbesondere von tragbaren kommunikationsfähigen Geräten, wie Smartphone, Watch, Datenbrille, PDA, Laptop, Tablet, Earpods, oder dergleichen, zu empfangen, und/oder abzufragen.

4. Ladungsträger nach Anspruch 2 oder 3, **dadurch gekennzeichnet, dass** der Receiver (31) einen Bluetooth-Sniffer (32) oder einen anderen Sensor zur Abfrage von Daten mobiler Endgeräte (30a, 30b) in der Umgebung des Ladungsträgers (10) umfasst.

5. Ladungsträger nach einem der vorgegangenen Ansprüche 2 bis 4, **dadurch gekennzeichnet, dass** der Receiver (31) zum Datenempfang per Datennahübertragung, z.B. per Bluetooth, WLAn oder NFC, ausgebildet ist.

6. Ladungsträger nach einem der vorangegangenen Ansprüche, **dadurch gekennzeichnet, dass** die Vorrichtung (31, 33) zur Erfassung von Umgebungsdaten einen Umgebungssensor (33) umfasst.

7. Ladungsträger nach Anspruch 6, **dadurch gekennzeichnet, dass** der Umgebungssensor (33) physikalische Messwerte aufnimmt, insbesondere Messwerte akustischer Art, optischer Art, induktiver Art, kapazitiver Art, thermischer Art, Vibrationsmesswerte, oder Beschleunigungswerte oder einen Lagesensor umfasst.

8. Ladungsträger nach einem der vorangegangenen Ansprüche, **dadurch gekennzeichnet, dass** der Einrichtung (50) eine Ortungsvorrichtung (17) zugehörig ist, mit der Positionsdaten erfassbar, ermittelbar oder herleitbar sind, die eine unmittelbare oder mittelbare Information über eine exakte Position (46a, 46b, 46c, 47a, 47b) des Ladungsträgers (10) umfassen.

9. Ladungsträger nach einem der vorgegangenen Ansprüche, **dadurch gekennzeichnet, dass** die Einrichung (50) einen Rechner (45) aufweist oder mit einem Rechner (20) kooperiert, mit dem aus den Umgebungsdaten eine unmittelbare oder mittelbare Information über eine exakte Position (46a, 46b, 46c, 47a, 47b) des Ladungsträgers (10) herleitbar ist.

10. Ladungsträger nach Anspruch 8, **dadurch gekennzeichnet, dass** die Einrichtung (50) einen Rechner (45) aufweist oder mit einem Rechner (20) kooperiert, mit dem die erlangten Positionsdaten mit den erlangten Umgebungsdaten kombinierbar sind.

11. Ladungsträger nach Anspruch 8 oder 10, **dadurch gekennzeichnet, dass** der Ortungsvorrichtung (17) zur Ermittlung der exakten Position des Ladungsträgers eine Differenzierungsvorrichtung (22) zugeordnet ist, mit der eine Position (47a, 47b) des Ladungsträgers in einem Lager (24) eines Geschäftes (23) von einer Position (46a, 46b, 46c) des Ladungsträgers (10) in einem Verkaufsraum (25) des Geschäftes (23) unterscheidbar ist.

12. Ladungsträger nach einem der vorangegangenen Ansprüche, **dadurch gekennzeichnet, dass** unter Zuhilfenahme einer Steuerung (44) der Einrichtung (50) das Erreichen des Verkaufsraumes (25) durch den Ladungsträger (10) feststellbar ist.

13. Ladungsträger nach einem der vorangegangenen Ansprüche, **dadurch gekennzeichnet, dass** von der Einrichtung (50) eine Information über das Erreichen des Verkaufsraumes (25) durch den Ladungsträger (10) nach deren Feststellung, insbesondere unmittelbar nach deren Feststellung, weiterleitbar ist, insbesondere an den externen Rechner (20) weiterleitbar ist.

14. Verfahren zum Erlangen von Informationen über ein Warendisplay (11), umfassend die folgenden Schritte:
a) Bereitstellen eines Ladungsträgers (10) für ein Warendisplay (11) in Form einer aus Kunststoff bestehenden Palette (12), insbesondere in Form einer Viertelpalette, umfassend ein Deck (13) mit einer Auflagefläche (14) für Waren, an dessen Unterseite (19) eine Mehrzahl von Füßen (18a, 18b, 18c, 18d) angeordnet ist, wobei der Ladungsträger (10) eine elektronische Einrichtung (50) mit einer autonomen Spannungsversorgung (39) umfasst, wobei der Einrichtung (50) eine Vorrichtung (31,33) zu Erfassung von Umgebungsdaten zugehörig ist, mit der Daten und/oder Messwerte aus der Umgebung des Ladungsträger ermittelbar sind, insbesondere Bereitstellen eines Ladungsträgers nach einem der vorangegangenen Ansprüche,
b) Verbringen des Warendisplays (11) mit dem Ladungsträger (10) und mit darauf angeordneten Waren (15) in einen Verkaufsraum (25),
c) Erfassen von Umgebungsdaten aus der Umgebung des Ladungsträgers,
d) Übermitteln der Umgebungsdaten oder von davon abgeleiteten Informationen mittels eines Transmitters (42) an einen externen Rechner (20).

15. Warendisplay (11), umfassend einen Ladungsträger nach einem der vorangegangenen Ansprüche 1 bis 13.
